# EUROPÄISCHE PATENTSCHRIFT

(11) **EP 4 282 017 B1**
(45) Veröffentlichungstag und Bekanntmachung des Hinweises auf die Patenterteilung: **25.12.2024**
(21) Anmeldenummer: 22701578.1
(22) Anmeldetag: 19.01.2022
(51) Int. Cl.: H01M 8/04029, H01M 8/04111, H01M 8/04089

(54) **FÖRDERVORRICHTUNG FÜR MEDIEN**
CONVEYING APPARATUS FOR MEDIA
DISPOSITIF DE TRANSPORT DE MILIEUX

(30) Priorität: 22.01.2021 DE 102021000306
(43) Veröffentlichungstag der Anmeldung: 29.11.2023
(73) Patentinhaber: cellcentric GmbH & Co. KG, 73230 Kirchheim/Teck-Nabern (DE)
(72) Erfinder: MÜTSCHELE, Armin, 73230 Kirchheim/Teck-Nabern (DE); BADOWSKY, Harald, 73230 Kirchheim/Teck-Nabern (DE)
(74) Vertreter: Platzöder, Michael Christian
(86) Internationale Anmeldenummer: PCT/EP2022/051152
(87) Internationale Veröffentlichungsnummer: WO 2022/157206

(56) Entgegenhaltungen:
- WO-A1-00/54353
- CN-U- 205 985 199
- DE-A1- 102012 001 604
- US-A1- 2007 172 707

## Beschreibung

Die Erfindung betrifft eine Fördervorrichtung für Medien in einem Brennstoffzellensystem nach der im Oberbegriff von Anspruch 1 näher definierten Art. Außerdem betrifft die Erfindung ein Brennstoffzellensystem mit einer solchen Fördervorrichtung sowie ein Fahrzeug mit einem solchen Brennstoffzellensystem.

Brennstoffzellensysteme, beispielsweise für den Einsatz zur Bereitstellung von elektrischer Antriebsleistung in zumindest teilweise elektrisch angetriebenen Fahrzeugen, sind soweit aus dem Stand der Technik bekannt. Bei Brennstoffzellensysteme ist es so, dass einerseits Luft als Sauerstofflieferant gefördert werden muss und andererseits eine Kühlanlage notwendig ist, in welcher ein typischerweise flüssiges Kühlmedium zur Abfuhr von Abwärme umgewälzt wird. Darüber hinaus ist es so, dass in vielen Brennstoffzellen ein sogenannter Anodenkreislauf vorhanden ist. Häufig wird zum Ausgleich von Druckverlusten alleine oder unterstützend zu einer Gasstrahlpumpe ein Rezirkulationsgebläse vorgesehen. In der Praxis ist es nun so, dass typischerweise sowohl die Kühlmittelpumpe als auch eine Luftfördereinrichtung, wie beispielsweise ein Strömungsverdichter, als auch eine Rezirkulationsfördereinrichtung, wie beispielsweise ein Rezirkulationsgebläse jeweils mit einem eigenen Antrieb, typischerweise einem elektromotorischen Antrieb, ausgestattet sind. Dies verursacht einerseits einen hohen Bedarf an Bauraum und andererseits die Notwendigkeit einer Vielzahl von elektrischen Zuleitungen zu den einzelnen Komponenten.

Die DE 10 2004 037 141 A1 beschreibt deshalb ein Brennstoffzellensystem mit Aggregaten zur Medienförderung, bei welchen ein gemeinsamer Antrieb für mehrere Aggregate vorhanden ist. Über entsprechende Drehzahlüber- und/oder Untersetzungsvorrichtungen, also Getrieben, werden dabei die notwendigen Drehzahlen und Förderleistungen angepasst sowie gegebenenfalls ein Zuschalten und Abschalten der einzelnen Aggregate zum Antrieb durch das eine Antriebsaggregat vorgenommen.

In der Praxis ist dieser Aufbau relativ kritisch zu bewerten, da durch die benötigten Getriebe, ähnlich wie durch die direkte Anbindung an die Antriebsmotoren gemäß dem zuvor genannten allgemeinen Stand der Technik, häufig Öle in den Bereich der geförderten Luft und/oder des umgewälzten Anodenabgases eingebracht werden. Diese sind für die Brennstoffzelle nachteilig und fördern eine Degradation der elektrochemisch aktiven Komponenten in der Brennstoffzelle, sodass es zu Nachteilen hinsichtlich der zu erwartenden Lebensdauer der Brennstoffzelle kommen kann.

Zum weiteren Stand der Technik kann außerdem auf die DE 10 2004 044 068 A1 hingewiesen werden. Diese Schrift beschreibt einen gemeinsamen Antrieb für zwei Fördereinrichtungen für die Luft zu einer Brennstoffzelle einerseits und die Rezirkulation von Anodenabgas andererseits. Um ein Vermischen dieser Stoffe zu verhindern, sind diese an den gemeinsamen Antriebsmotor hermetisch abgedichtet angebunden, indem der Aufbau jeweils in Form sogenannter Spaltrohrmotoren realisiert ist.

Zum weiteren Stand der Technik kann auf die DE 10 2012 008 494 A1 hingewiesen werden, welche zwei Kühlmedienpumpen mit einem gemeinsamen elektromotorischen Antrieb zeigt. Außerdem kann noch auf die WO 2010/082913 A1 hingewiesen werden. Diese zeigt mehrere in einem Motorgehäuse zusammengefasste elektromotorische Antriebe, welche mit den jeweils angetriebenen Förderaggregaten magnetisch gekoppelt sind. Weiterhin offenbart das Dokument WO 00/54353 A1 ein Verfahren, bei dem ein zum Betrieb einer Brennstoffzellenanlage benötigter Hilfsenergieverbrauch gesenkt und damit eine außerhalb der Brennstoffzellenanlage nutzbare elektrische Energie erhöht werden soll. Bei diesem Verfahren werden ein Luftverdichter und eine Wasserpumpe der Brennstoffzellenanlage von einem gemeinsamen, drehzahlgesteuerten Antriebsmotor angetrieben. Ferner offenbart das Dokument CN 205 985 199 U ein Brennstoffzellensystem mit einer integrierten Antriebsstruktur.

Die Aufgabe der hier vorliegenden Erfindung besteht nun darin, eine verbesserte Fördervorrichtung für Medien in einem Brennstoffzellensystem anzugeben.

Erfindungsgemäß wird diese Aufgabe durch eine Fördervorrichtung mit den Merkmalen im Anspruch 1 gelöst. Ferner löst ein Brennstoffzellensystem mit einer solchen Fördervorrichtung die Aufgabe. Auch ein Fahrzeug mit einem Brennstoffzellensystem und einer solchen Fördervorrichtung kann die Aufgabe lösen.

Weitere vorteilhafte Ausgestaltungen der Fördervorrichtung ergeben sich dabei außerdem aus den vom Hauptanspruch abhängigen Unteransprüchen.

Die erfindungsgemäße Fördervorrichtung nutzt ähnlich wie der eingangs genannte Stand der Technik eine gemeinsame Antriebsmaschine für eine Kühlmedienpumpe, eine

Fördereinrichtung für Luft und eine Fördereinrichtung für Anodenabgas. Die Antriebsmaschine ist dabei direkt mit einer Rotorwelle der Antriebsmaschine mit der Kühlmedienpumpe verbunden. Eventuelle Schmierstoffe und dergleichen, welche im Bereich der Antriebsmaschine, typischerweise eine elektrische Antriebsmaschine, benötigt werden, sind hier relativ unkritisch, sodass hier die direkte Anbindung mit einer gemeinsamen Welle von Vorteil ist. Neben dieser direkten Kopplung ist nun entweder die Kühlmedienpumpe oder die Antriebsmaschine magnetisch mit einer der Fördereinrichtungen gekoppelt und wiederum die Antriebsmaschine oder die gekoppelte Fördereinrichtung ist dann mit einer weiteren magnetischen Kopplung mit der anderen Fördereinrichtung gekoppelt.

Dies hat prinzipiell den entscheidenden Vorteil, dass lediglich eine einzige Antriebsmaschine, vorzugsweise eine elektrische Antriebsmaschine, welche gegebenenfalls jedoch von einer Turbine unterstützt werden kann, wie es bei dem sogenannten elektrischen Turbolader, wie er in Brennstoffzellensystemen allgemein bekannt und üblich ist, der Fall ist, benötigt wird. Diese Antriebsmaschine kann nun ihrerseits mit ihrer angetriebenen Welle, beispielsweise der Rotorwelle des elektrischen Antriebsmotors, direkt mit der Kühlmedienpumpe gekoppelt sein und diese unmittelbar antreiben. Über magnetische Kupplungen sind dann die beiden Fördereinrichtungen für die Luft und das Anodenabgas angekoppelt. Diese können beispielsweise hintereinander angekoppelt sein, sodass also die eine der Fördereinrichtungen, beispielsweise Luftfördereinrichtung bzw. ihr Verdichterrad, über eine Magnetkupplung mit der Pumpe gekoppelt ist und ein Gebläserad der Rezirkulationsfördereinrichtung wiederum mit einer magnetischen Kupplung mit der Luftfördereinrichtung gekoppelt ist. Dies hat den entscheidenden Vorteil, dass weder in die Luft noch das rezirkulierte Anodenabgas unerwünschte Stoffe aus dem Bereich der elektrischen Maschine eingetragen werden. Ein vergleichbarer Aufbau ist selbstverständlich auch möglich, wenn eine oder beide der Fördereinrichtungen magnetisch an die Antriebsmaschine angekoppelt sind, und auf der anderen Seite die Kühlmedienpumpe alleine oder die Kühlmedienpumpe und eine der Fördereinrichtungen entsprechend angekoppelt ist.

Die magnetische Ankopplung der Fördereinrichtung für die Luft einerseits und der Fördereinrichtung zur Rezirkulation des Anodenabgases andererseits haben dabei den entscheidenden Vorteil, dass der Aufbau mit den entsprechenden Medien sehr einfach und effizient abgedichtet werden kann. Insbesondere beim Anodenabgas, welches Wasserstoff enthält, ist dies von entscheidendem Vorteil, um das Austreten von Wasserstoff an die Umgebung effizient zu verhindern. Dies ist aus Sicherheitsgründen unumgänglich.

Für zumindest eine der Fördereinrichtungen ist dabei gemäß einer vorteilhaften Ausgestaltung der Fördereinrichtung ein Getriebe zur Drehzahlanpassung im Bereich der Kühlmedienpumpe und/oder einer der Fördereinrichtungen vorgesehen. Vorzugsweise ist es dabei so, dass das Getriebe motorseitig oder im Bereich der Kühlmedienpumpe angeordnet ist und die bereits übersetzte Drehzahl dann über die Magnetkupplung auf das Verdichterrad und/oder das Gebläserad der jeweiligen Fördereinrichtung übertragen wird. Dieser Aufbau minimiert die Kontamination mit entsprechenden Schmierstoffen, welche beispielsweise im Bereich des Getriebes vorgesehen sind. Je nach Aufbau der entsprechenden Fördereinrichtung können jedoch auch einfache ungeschmierte Getriebeelemente zum Einsatz kommen, beispielsweise im Bereich des Rezirkulationsgebläses, sodass das Getriebe auch zwischen der magnetischen Kupplung und dem Rezirkulationsgebläse selbst angeordnet sein könnte.

Wie bereits erwähnt eignet sich eine solche Fördervorrichtung insbesondere für den Einsatz in Brennstoffzellensystemen, welche wenigstens eine Kühlmedienpumpe, wenigstens eine Fördereinrichtung für die Luft und wenigstens eine Fördereinrichtung zur Rezirkulation von Anodenabgas aufweisen. Die Fördervorrichtung kann dort vorteilhaft zum Einsatz kommen. Dies gilt dabei prinzipiell sowohl bei stationären Brennstoffzellensystemen als auch bei Fahrzeugen, welche mit wenigstens einem dieser Brennstoffzellensysteme mit zumindest einem Teil ihrer elektrischen Antriebsleistung versorgt werden.

Weitere vorteilhafte Ausgestaltungen der erfindungsgemäßen Fördervorrichtung, des Brennstoffzellensystems und des Fahrzeugs ergeben sich auch aus dem Ausführungsbeispiel, welches unter Bezugnahme auf die Figuren nachfolgend näher dargestellt ist.

Dabei zeigen:
- Fig. 1: ein schematisch angedeutetes Brennstoffzellensystem zur Nutzung der erfindungsgemäßen Fördervorrichtung;
- Fig. 2: eine erste mögliche Ausführungsform der erfindungsgemäßen Fördervorrichtung in einer schematischen Darstellung; und
- Fig. 3: eine weitere alternative Ausführungsform der erfindungsgemäßen Fördervorrichtung in einer schematischen Darstellung.

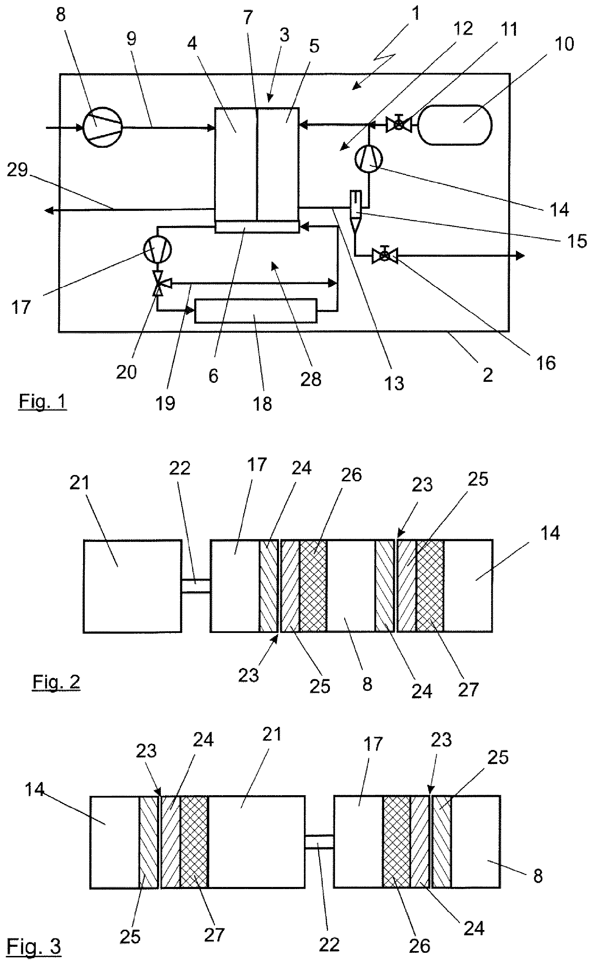

In der Darstellung der Figur 1 ist ein Brennstoffzellensystem 1 zu erkennen, welches in einem sehr stark schematisiert angedeuteten Fahrzeug 2 zur Bereitstellung von zumindest einem Teil der elektrischen Antriebsleistung zum Einsatz kommen soll. Je nach Fahrzeug 2 sind dabei mehrere derartige Brennstoffzellensysteme 1 vorgesehen oder innerhalb des hier gezeigten Brennstoffzellensystems 1 sind einer oder mehrere Brennstoffzellenstapel 3 vorgesehen. Der hier schematisch angedeutete eine Brennstoffzellenstapel 3 umfasst einen Kathodenraum 4, einen Anodenraum 5 sowie einen exemplarisch angedeuteten Kühlwärmetauscher 6 im Inneren des Brennstoffzellenstapels 3. Der Kathodenraum 4 ist dabei durch eine protonenleitende Membran 7 vom Anodenraum 5 getrennt. In der Realität ist dieser Aufbau als Stapel von Einzelzellen realisiert. In der Darstellung ist rein beispielhaft ein gemeinsamer Kathodenraum 4 und ein gemeinsamer Anodenraum 5 sowie ein gemeinsamer Kühlwärmetauscher 6 schematisch angedeutet.

Zur Bereitstellung der elektrischen Leistung durch den Brennstoffzellenstapel 3 wird diesem über eine Fördereinrichtung 8 Luft über eine Zuluftleitung 9 zugeführt. Abluft gelangt über eine Abluftleitung 29 an Sauerstoff abgereichert aus dem Brennstoffzellensystem 1 und dem Fahrzeug 2. In diesem Bereich könnte in an sich bekannter Art und Weise eine Abluftturbine vorgesehen werden, um Druckenergie und Wärmeenergie aus der Abluft zurückzugewinnen. Diese ist soweit aus dem Stand der Technik bekannt und könnte hier ebenfalls vorhanden sein. Auf eine Darstellung ist zur Vereinfachung der Figur 1 verzichtet worden.

Dem Kathodenraum 4 wird Wasserstoff aus einem Druckgasspeicher 10 über ein Druckregel- und Dosierventil 11 zugeführt. Nicht verbrauchter Wasserstoff wird in einem sogenannten Anodenkreislauf 12 über eine Rezirkulationsleitung 13 zurückgeführt. Druckverluste werden dabei durch eine Fördereinrichtung 14 für das rezirkulierte Anodenabgas ausgeglichen. Über einen Wasserabscheider 15 wird im Bereich des Anodenraums 5 entstehendes Produktwasser abgeschieden. Dieses wird über ein Ventil 16 zusammen mit sich im Anodenkreislauf 12 anreichernden inerten Gasen beispielsweise von Zeit zu Zeit oder in Abhängigkeit der Wasserstoffkonzentration in dem Anodenkreislauf 12 abgelassen.

Der Kühlwärmetauscher 6 des Brennstoffzellenstapels 3 ist Teil eines Kühlkreislaufs 28, in welchem ein flüssiges Kühlmedium über eine Kühlmedienpumpe 17 umgewälzt wird. Die Abwärme wird über einen Kühlwärmetauscher, umgangssprachlich auch als Kühler bezeichnet, in die Umgebung des Fahrzeugs 2 abgegeben. Der sehr stark vereinfacht dargestellte Kühlkreislauf 28 weist außerdem eine Bypassleitung 19 zur Umgehung des Kühlwärmetauschers 18 auf, sodass mit einem diese Bypassleitung steuernden Ventil 20 sowie der Drehzahl der Kühlmedienpumpe 17 die Kühlleistung gesteuert werden kann.

All dies ist für den Fachmann soweit bekannt, sodass hierauf nicht weiter eingegangen werden muss.

Die Kühlmedienpumpe 17 und die beiden Fördereinrichtungen 8, 14 sollen nun über eine gemeinsame Antriebsmaschine 21 angetrieben werden. In der Darstellung der Figur 2 ist diese gemeinsame Antriebsmaschine 21 angedeutet. Es kann sich bei dieser Antriebsmaschine 21 beispielsweise um eine elektrische Antriebsmaschine handeln. Sie kann außerdem mit der oben bereits angesprochenen optimalen Abluftturbine mechanisch oder elektrisch gekoppelt werden, um einen möglichst energieeffizienten Antrieb zu realisieren. Die Antriebsmaschine 21 ist über eine Welle 22 direkt mit der Kühlmedienpumpe 17 gekoppelt. Die Kühlmedienpumpe 17 selbst bzw. ihr Pumpenrad ist dann über eine magnetische Kupplung 23 mit einer Antriebsseite 24 und einer Abtriebsseite 25 mit der Fördereinrichtung 8 für die Luft gekoppelt. Zwischen der Abtriebsseite 25 der magnetischen Kupplung 23 und der Fördereinrichtung 8 kann außerdem ein kreuzschraffiert dargestelltes optionales Getriebe 26 vorgesehen sein. Die Fördereinrichtung 8 für die Luft ist ihrerseits über eine weitere magnetische Kupplung 23 wiederum mit einer Antriebsseite 24 und einer Abtriebsseite 25 mit der Fördereinrichtung 14 für das zurückgeführte Anodenabgas gekoppelt. Auch hier kann ein weiteres Getriebe 27 zwischen der Abtriebsseite 25 der zweiten magnetischen Kupplung 23 und der Fördereinrichtung 14 bzw. ihrem Gebläserad vorgesehen sein.

Der primäre Eintrag von Schmierstoffen geschieht in dem Bereich, in dem die Welle 22 die Antriebsmaschine 21 und die Kühlmedienpumpe 17 direkt verbindet. Für das Kühlmedium ist dieser Eintrag typischerweise unschädlich. Dahingegen ist der Eintrag von Schmierstoffen in die Luft und vor allem in das rezirkulierte Abgas kritisch, da dieses in den Anodenraum 5 oder den Kathodenraum 4 gelangen und dort die elektrochemischen Eigenschaften des Brennstoffzellenstapels 3 nachteilig beeinflussen könnte. Aus diesem Grund kann über die beiden magnetischen Kupplungen 23 eine relativ gute und leicht abzudichtende Abkopplung dieser Fördereinrichtungen 8, 14 von der Antriebsmaschine 21 erfolgen. Die optionalen Getriebe 26, 27 können die Situation zwar wieder verschärfen, häufig sind in diesem Bereich jedoch nicht oder nur minimal geschmierte Getriebe notwendig, sodass dies relativ unkritisch bleibt.

In der Darstellung der Figur 3 ist eine alternative Ausführungsvariante dargestellt. Die elektrische Antriebsmaschine 21 ist über ihre Welle 22 wieder mit der Kühlmedienpumpe 17 direkt gekoppelt. Diese ist dann über das optionale Getriebe 26, welches dieses Mal auf der Seite der Kühlmedienpumpe 17 angeordnet ist, mit einer der Magnetkupplungen 23 mit der Fördereinrichtung 8 für die Luft entsprechend gekoppelt. Eventuelle Kontaminationen mit Schmiermittel innerhalb des Getriebes 26 können so von der über die Fördereinrichtung 8 verdichteten Luft ferngehalten werden, da die sehr gut abzudichtende magnetische Kopplung über die magnetische Kupplung 23 zwischen dem Getriebe und dem Verdichterrad der Fördereinrichtung 8 erfolgt.

Die weitere Fördereinrichtung 14 schließt sich nun nicht dem Verdichterrad der Fördereinrichtung 8 an, sondern ist auf der anderen Seite des Antriebsmotors 21 angeordnet. Auch hier ist so, dass motorseitig das optionale Getriebe 27 angeordnet ist und dann erst die magnetische Kupplung 23 folgt, sodass auch hier ein Eintrag eventueller Kontaminationen von der elektrischen Antriebsmaschine 21 und des optionalen Getriebes in den Bereich des Gebläserads der Fördereinrichtung 14 verhindert werden kann.

Dieser Aufbau mit einer gegenüber der Darstellung in Figur 2 gedrehten Reihenfolge von optionalem Getriebe 26, 27 und magnetischer Kupplung 23 wäre so selbstverständlich auch in der Darstellung der Figur 2 denkbar. Ebenso wäre es denkbar, bei dem Aufbau gemäß Figur 3 die in Figur 2 gezeigte Reihenfolge einzusetzen. Außerdem wäre es selbstverständlich denkbar, die beiden Fördereinrichtungen 8, 14 gegeneinander zu vertauschen oder beide auf der einen Seite der elektrischen Antriebsmaschine 21 anzubringen und die Kühlmedienpumpe 17 auf der anderen Seite der Antriebsmaschine 21.

## Patentansprüche

1. Fördervorrichtung für Medien in einem Brennstoffzellensystem (1) mit einer Antriebsmaschine (21), über welche über wenigstens eine Kühlmedienpumpe (17) wenigstens eine Fördereinrichtung (8) für Luft und wenigstens eine Fördereinrichtung (14) für rezirkuliertes Anodenabgas angetrieben sind,
**dadurch gekennzeichnet, dass**
die Antriebsmaschine (21) eine Rotorwelle (22) aufweist, mit welcher die Kühlmedienpumpe (17) direkt gekoppelt ist, wobei die Kühlmedienpumpe (17) oder die Antriebsmaschine (21) magnetisch mit einer der Fördereinrichtungen (8, 14) und die Antriebsmaschine (21) oder die Fördereinrichtung (8, 14) magnetisch mit der anderen Fördereinrichtung (14, 8) gekoppelt ist.

2. Fördervorrichtung nach Anspruch 1,
**dadurch gekennzeichnet, dass**
die Fördereinrichtung (8) für die Luft als Strömungsverdichter ausgebildet ist.

3. Fördervorrichtung nach Anspruch 1 oder 2,
**dadurch gekennzeichnet, dass**
die Fördereinrichtung (14) zur Rezirkulation von Anodenabgas als Rezirkulationsgebläse ausgebildet ist.

4. Fördervorrichtung nach Anspruch 1, 2 oder 3,
**dadurch gekennzeichnet, dass**
im Bereich zumindest einer der Fördereinrichtungen (8, 14) ein Getriebe (26, 27) zur Drehzahlanpassung vorgesehen ist.

5. Fördervorrichtung nach Anspruch 4,
**dadurch gekennzeichnet, dass**
das Getriebe (26, 27) auf der der jeweiligen Fördereinrichtung (8, 14) abgewandten Seite der magnetischen Kupplung (23) vorgesehen ist.

6. Brennstoffzellensystem (1) mit einer Fördervorrichtung nach einem der Ansprüche 1 bis 5.

7. Fahrzeug (2) mit wenigstens einem Brennstoffzellensystem (1) nach Anspruch 6.

## Claims

1. A conveying apparatus for media in a fuel cell system (1) having a drive machine (21), via which at least one conveying device (8) for air and at least one conveying device (14) for recirculated anode exhaust gas are driven via at least one cooling medium pump (17),
**characterized in that**
the drive machine (21) includes a rotor shaft (22) to which the cooling medium pump (17) is directly coupled, wherein the cooling medium pump (17) or the drive machine (21) is magnetically coupled to one of the conveying devices (8, 14) and the drive machine (21) or the conveying device (8, 14) is magnetically coupled to the other conveying device (14, 8).

2. The conveying apparatus according to claim 1,
**characterized in that**
the conveying device (8) for the air is designed as a flow compressor.

3. The conveying apparatus according to claim 1 or 2,
**characterized in that**
the conveying device (14) for the recirculation of anode exhaust gas is designed as a recirculation fan.

4. The conveying apparatus according to claim 1, 2, or 3,
**characterized in that**
a gear (26, 27) for speed matching is provided in the area of at least one of the conveying devices (8, 14).

5. The conveying apparatus according to claim 4,
**characterized in that**
the gear (26, 27) is provided on the side of the magnetic clutch (23) facing away from the respective conveying device (8, 14).

6. A fuel cell system (1) having a conveying apparatus as claimed in any one of claims 1 to 5.

7. A vehicle (2) having at least one fuel cell system (1) as claimed in claim 6.

## Revendications

1. Dispositif de transport pour des milieux dans un système de pile à combustible (1) avec une machine d'entraînement (21), par le biais de laquelle au moins un dispositif de transport (8) pour de l'air et au moins un dispositif de transport (14) pour des effluents gazeux d'anode recyclés sont entraînés par le biais d'au moins une pompe à milieu de refroidissement (17),
**caractérisé en ce que**
la machine d'entraînement (21) présente un arbre de rotor (22), auquel la pompe à milieu de refroidissement (17) est directement couplée, dans lequel la pompe à milieu de refroidissement (17) ou la machine d'entraînement (21) est couplée magnétiquement à un des dispositifs de transport (8, 14) et la machine d'entraînement (21) ou le dispositif de transport (8, 14) est couplé magnétiquement à l'autre dispositif de transport (14, 8).

2. Dispositif de transport selon la revendication 1, **caractérisé en ce que**
le dispositif de transport (8) pour l'air est réalisé en tant que compresseur d'écoulement.

3. Dispositif de transport selon la revendication 1 ou 2, **caractérisé en ce que**
le dispositif de transport (14) est réalisé pour le recyclage d'effluents gazeux d'anode en tant que soufflante de recyclage.

4. Dispositif de transport selon la revendication 1, 2 ou 3,
**caractérisé en ce que**
un engrenage (26, 27) est prévu pour l'adaptation de la vitesse de rotation dans la zone au moins d'un des dispositifs de transport (8, 14).

5. Dispositif de transport selon la revendication 4, **caractérisé en ce que**
l'engrenage (26, 27) est prévu sur le côté éloigné du dispositif de transport (8, 14) respectif du couplage magnétique (23).

6. Système de pile à combustible (1) avec un dispositif de transport selon l'une quelconque des revendications 1 à 5.

7. Véhicule (2) avec au moins un système à pile à combustible (1) selon la revendication 6.
